# EUROPEAN PATENT APPLICATION

(11) **EP 4 474 035 A1**
(43) Date of publication of application: **11.12.2024**
(21) Application number: 23749495.0
(22) Date of filing: 16.01.2023
(51) Int. Cl.: B01D 39/14, B60R 21/264

(54) **WINDING FILTER**

(30) Priority: 02.02.2022 JP 2022015268
(71) Applicant: Nippon Kayaku Kabushiki Kaisha, Tokyo 100-0005 (JP)
(72) Inventor: Shikaura, Kenji, Himeji-shi, Hyogo 679-2123 (JP); Minami, Kouki, Himeji-shi, Hyogo 679-2123 (JP)
(74) Representative: Gille Hrabal Partnerschaftsgesellschaft mbB Patentanwälte
(86) International application number: PCT/JP2023/001067
(87) International publication number: WO 2023/149178

(57) **Abstract**

Provided is a winding filter that can be more easily manufactured while having shape retainability similar to that of the related art even if the winding filter is not subjected to heat treatment.

A winding filter formed in a cylindrical body including a stitch by overlapping metal wire materials 91 forming a plurality of layers in a radial direction, in which a terminal end portion (adhesive portion 93) of the metal wire material 91 of an outermost layer among the plurality of layers is joined by: adhesion to a part of a layer adjacent at least radially inward relative to the outermost layer; being drawn into an inner surface side via either one of axial end portions and adhesion to at least a part of an innermost layer, or adhesion to a part of either one of the axial end portions, and a joining strength of the terminal end portion (adhesive portion 93) of the metal wire material 91 of the outermost layer is 5 N or more.

## Description

### TECHNICAL FIELD

The present invention relates to a winding filter for a gas generator incorporated in an occupant protection device that protects an occupant in the event of collision of a vehicle or the like.

### BACKGROUND ART

Conventionally, an airbag device that is an occupant protection device has been widely used from the viewpoint of protecting an occupant of an automobile or the like. An airbag device is provided for the purpose of protecting an occupant from an impact generated at the time of collision of a vehicle or the like, and instantly inflates and deploys the airbag at the time of collision of the vehicle or the like, so that the airbag serves as a cushion to receive a body of the occupant.

A gas generator is a device that is incorporated in the airbag device, ignites an igniter by energization from a control unit at the time of collision of a vehicle or the like, burns a gas generating agent by flame generated in the igniter to instantaneously generate a large amount of gas, and thereby inflates and deploys the airbag.

There are various gas generators having various structures, and as a gas generator that can be particularly suitably used for a driver seat side airbag device, a passenger seat side airbag device, and the like, there is a short substantially cylindrical disk-type gas generator having a relatively large outer diameter.

The disk-type gas generator has a short substantially cylindrical housing in which both ends in an axial direction are closed, a plurality of gas ejection ports are provided in a circumferential wall portion of the housing, an enhance agent is housed in the housing so as to face the igniter assembled to the housing, a gas generating agent is further filled in the housing so as to surround the enhance agent, and a filter is housed in the housing so as to further surround a circumference of the gas generating agent.

For example, Patent Literature 1 discloses a winding-type filtration member (winding filter) including a plurality of overlapping portions in which at least one element wire is wound in a cylindrical and net shape and adjacent portions of the element wire are overlapped with each other, in which the plurality of overlapping portions includes two or more fixing portions in which the adjacent portions are fixed to each other and a non-fixing portion in which the adjacent portions are not fixed to each other, and each of the overlapping portions formed from the adjacent portions of the element wire constituting an outermost layer and an adjacent layer adjacent to the outermost layer in a diameter reduction direction includes the non-fixing portion.

### CITATIONS LIST

### PATENT LITERATURE

Patent Literature 1: JP 5094047 B2

### SUMMARY OF INVENTION

### TECHNICAL PROBLEMS

Although the winding filter of Patent Literature 1 described above is a non-sintered filter that is not subjected to heat treatment, two or more fixing portions by welding are required in the overlapping portion as described above in order to maintain the shape even at the time of assembly and at the time of activation of gas generator. However, in recent years, there has been a demand for a non-sintered winding filter that can maintain its shape even at the time of assembly and at the time of activation of the gas generator and can be more easily manufactured.

Therefore, the present invention has been made in view of such circumstances, and an object of the present invention is to provide a winding filter that can be more easily manufactured while having shape retainability similar to that of the related art even without being subjected to heat treatment.

### SOLUTIONS TO PROBLEMS

(1) The present invention is a winding filter not subjected to sintering, the winding filter including a cylindrical body including a stitch by overlapping at least one element wire forming a plurality of layers in a radial direction, in which a terminal end portion of the element wire of an outermost layer among the plurality of layers is joined by: adhesion to a part of a layer adjacent at least radially inward relative to the outermost layer; being drawn into an inner surface side via either one of axial end portions and adhesion to at least a part of an innermost layer, or adhesion to a part of either one of the axial end portions, and a joining strength of the terminal end portion is 5 N or more.
(2) In the gas generator of (1) described above, it is preferable that the adhesion is adhesion by welding, and the joining strength of the terminal end portion is a welding strength.
(3) As another aspect, the present invention may be a winding filter not subjected to sintering, the winding filter including a cylindrical body including a stitch by overlapping at least one element wire forming a plurality of layers in a radial direction, in which a terminal end portion of the element wire of an outermost layer among the plurality of layers is joined by adhesion to a part of a layer (hereinafter, an adjacent layer) adjacent to the outermost layer on a radially inner side, and the terminal end portion is joined to the adjacent layer at any position in a region having a length within a half from an axial intermediate position of the cylindrical body to one axial end portion of the cylindrical body and a region having a length within a half from the axial intermediate position of the cylindrical body to an other axial end portion of the cylindrical body.
(4) In the gas generator of (1) to (3) described above, it is preferable that a corner portion of at least one end portion of both axial end portions of the cylindrical body is formed in a rounded shape as viewed from the side.
(5) In the gas generator of (4) described above, it is preferable that the rounded shape is formed by at least two element wires being arranged in parallel.
(6) In the gas generator of (4) or (5) described above, it is preferable that the element wire in an end surface of the end portion formed in the rounded shape is disposed along a surface in a direction substantially perpendicular to an axial direction of the cylindrical body.

### ADVANTAGEOUS EFFECTS OF INVENTION

According to the present invention, it is possible to provide a winding filter that can be more easily manufactured while having shape retainability similar to that of the related art even if the winding filter is not subjected to heat treatment.

### BRIEF DESCRIPTION OF DRAWINGS

FIG. 1 is a schematic cross-sectional view of a disk-type gas generator according to a first embodiment of the present invention.
FIG. 2 is a schematic view of a winding filter of the disk-type gas generator of FIG. 1, in which FIG. 2(a) is a top view and FIG. 2(b) is a side view.
FIG. 3 is an enlarged view of a terminal end portion of the winding filter of FIG. 2.
FIG. 4 is a schematic view of a modification of the winding filter of FIG. 2, and is a perspective view illustrating a position where a terminal end of an element wire is joined.
FIG. 5 is a view for explaining load calculation applied to a welded portion of the winding filter of FIG. 2, in which FIG. 5(a) is a perspective view illustrating a cylindrical model for calculating a load applied to an adhesion portion, and FIG. 5(b) is a partially cutaway enlarged view of FIG. 5(a).
FIG. 6 is a schematic view of a winding filter according to a second embodiment of the present invention when the winding filter is wound twice from one end portion to the other end portion, and is a view for explaining an event that occurs at the time of assembly.
FIG. 7(a) is a cross-sectional view for explaining a gap portion of a gas generator according to the second embodiment of the present invention, and FIG. 7(b) is a partially enlarged view of a winding filter in FIG. 7(a).
FIG. 8 is a schematic view of a winding filter according to a modification of the second embodiment of the present invention when the winding filter is wound three times from one end portion to the other end portion, and is a view for explaining an event that occurs at the time of assembly.

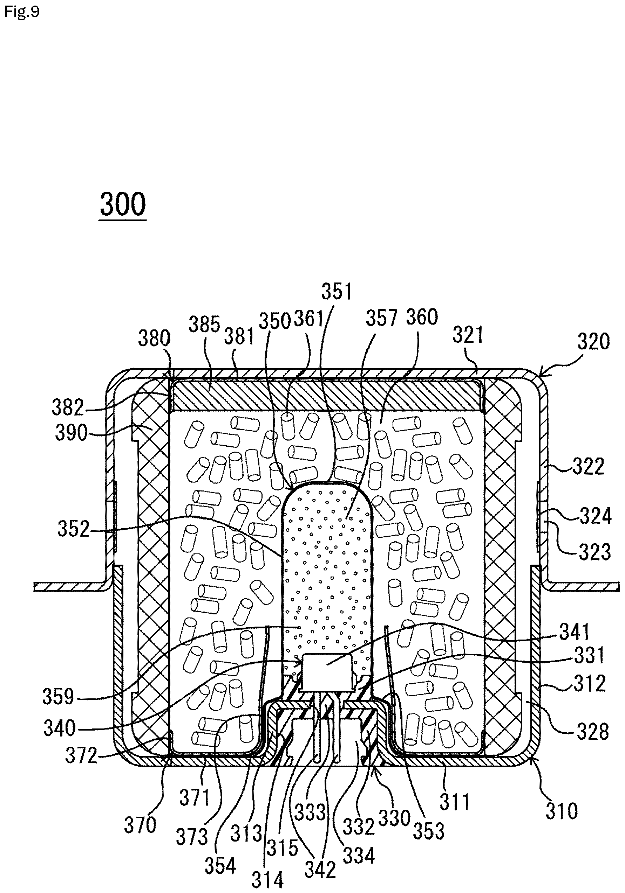

FIG. 9 is a schematic cross-sectional view of a disk-type gas generator according to a third embodiment of the present invention.
FIG. 10 is a side view of the winding filter of a disk-type gas generator of FIG. 8.

### DESCRIPTION OF EMBODIMENTS

### <First embodiment>

Hereinafter, a first embodiment of the present invention will be described in detail with reference to the drawings. In the following embodiment, a winding filter of the present invention is applied to a disk-type gas generator suitably incorporated in an airbag device mounted on a steering wheel or the like of an automobile.

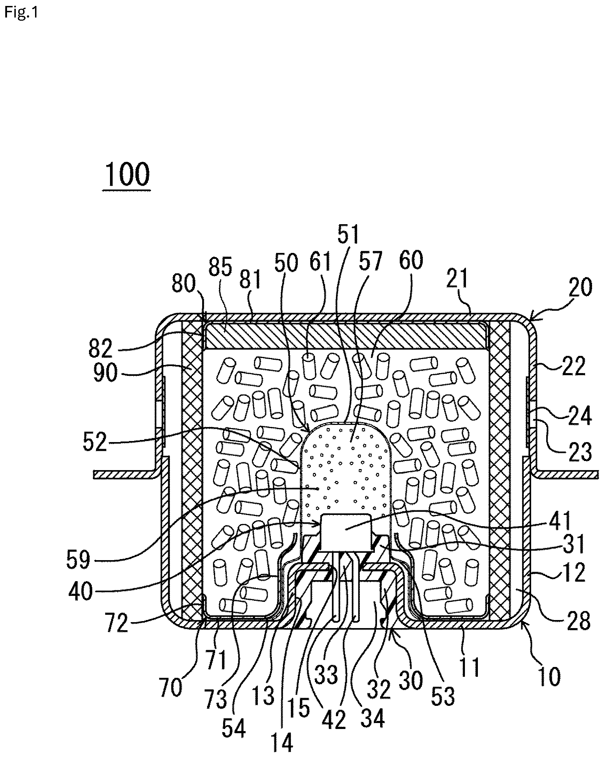

FIG. 1 is a schematic view of a disk-type gas generator 100 in an embodiment of the invention. First, a configuration of the disk-type gas generator 100 according to the present exemplary embodiment will be described with reference to FIG. 1.

As illustrated in FIG. 1, the disk-type gas generator 100 includes a short substantially cylindrical housing in which one end and the other end in an axial direction are closed, and a holding portion 30, an igniter 40, a cup-shaped member 50, an enhance agent 59, a gas generating agent 61, a lower support member 70, an upper support member 80, a cushion material 85, a filter 90 (winding filter), and the like are accommodated as internal components in an accommodation space provided inside the housing. Furthermore, a combustion chamber 60 in which the gas generating agent 61 among the above-described internal components is mainly accommodated is located in the accommodation space provided inside the housing.

The housing includes a lower side shell 10 and an upper side shell 20. Each of the lower side shell 10 and the upper side shell 20 is made of, for example, a press-molded product formed by pressing a rolled metal plate-like member. As the metal plate-like member constituting the lower side shell 10 and the upper side shell 20, for example, a metal plate made of stainless steel, steel, aluminum alloy, stainless alloy, or the like is used, and preferably, a so-called high-tensile steel plate in which damage such as breakage does not occur even in a case where a tensile stress of 440 [MPa] or more and 780 [MPa] or less is applied is used.

Each of the lower side shell 10 and the upper side shell 20 is formed in a bottomed substantially cylindrical shape, and these opening surfaces are combined and joined so as to face each other to constitute the housing. The lower side shell 10 includes a bottom plate portion 11 and a circumferential wall portion 12, and the upper side shell 20 includes a top plate portion 21 and a circumferential wall portion 22.

An upper end of the circumferential wall portion 12 of the lower side shell 10 is press-fitted by being inserted into a lower end of the circumferential wall portion 22 of the upper side shell 20. Moreover, the circumferential wall portion 12 of the lower side shell 10 and the circumferential wall portion 22 of the upper side shell 20 are joined at or near an abutment portions, whereby the lower side shell 10 and the upper side shell 20 are fixed. Here, electron beam welding, laser welding, friction welding, or the like can be suitably used for joining the lower side shell 10 and the upper side shell 20.

Thus, a portion of the circumferential wall portion of the housing closer to the bottom plate portion 11 is configured by the circumferential wall portion 12 of the lower side shell 10, and a portion of the circumferential wall portion of the housing closer to the top plate portion 21 is configured by the circumferential wall portion 22 of the upper side shell 20. Furthermore, one end and the other end of the housing in the axial direction are closed by the bottom plate portion 11 of the lower side shell 10 and the top plate portion 21 of the upper side shell 20, respectively.

A protruding cylinder portion 13 protruding toward the top plate portion 21 is provided at a central portion of the bottom plate portion 11 of the lower side shell 10, whereby a recessed portion 14 is formed at the central portion of the bottom plate portion 11 of the lower side shell 10. The protruding cylinder portion 13 is a portion to which the igniter 40 is fixed via the holding portion 30, and the recessed portion 14 is a portion serving as a space for providing a female connector portion 34 in the holding portion 30.

The protruding cylinder portion 13 is formed in a bottomed substantially cylindrical shape, and an opening portion 15 having a non-point symmetrical shape (for example, a D shape, a barrel shape, an oval shape, or the like) in a plan view is provided at an axial end portion located on a side of the top plate portion 21. The opening portion 15 is a portion through which a pair of terminal pins 42 of the igniter 40 is inserted.

The igniter 40 is for generating flame, and includes an ignition portion 41 and the above-described pair of terminal pins 42. The ignition portion 41 internally includes an ignition agent that ignites and burns at the time of activation to generate flame, and a resistor for igniting the ignition agent. The pair of terminal pins 42 is connected to the ignition portion 41 in order to ignite the ignition agent.

More specifically, the ignition portion 41 includes a squib cup formed in a cup shape, and an embolus that closes an opening end of the squib cup and through which the pair of terminal pins 42 is inserted to hold the terminal pins, and has a configuration in which the resistor (bridge wire) is attached so as to connect tips of the pair of terminal pins 42 inserted into the squib cup, and the ignition agent is loaded in the squib cup so as to surround the resistor or to be close to the resistor.

Here, a nichrome wire or the like is generally used as the resistor, and ZPP (zirconium, potassium perchlorate), ZWPP (zirconium, tungsten, potassium perchlorate), lead tricinate, or the like is generally used as the ignition agent. Note that the above-described squib cup and embolus are generally made of metal or plastic.

When the collision is detected, a predetermined amount of current flows through the resistor via the terminal pins 42. When a predetermined amount of current flows through the resistor, Joule heat is generated in the resistor, and the ignition agent starts combustion. A high temperature flame resulting from the combustion ruptures the squib cup containing the ignition agent. The time from when the current flows through the resistor to when the igniter 40 is activated is generally 2 [ms] or less in a case where a nichrome wire is used as the resistor.

The igniter 40 is attached to the bottom plate portion 11 in a state of being inserted from the inside of the lower side shell 10 such that the terminal pins 42 are inserted into the opening portion 15 provided in the protruding cylinder portion 13. Specifically, the holding portion 30 formed of a resin molding portion is provided around the protruding cylinder portion 13 provided on the bottom plate portion 11, and the igniter 40 is fixed to the bottom plate portion 11 by being held by the holding portion 30.

The holding portion 30 is formed by injection molding (more specifically, insert molding) using a mold, and is formed by attaching an insulating flowable resin material to the bottom plate portion 11 so as to reach from a part of an inner surface to a part of an outer surface of the bottom plate portion 11 via the opening portion 15 provided in the bottom plate portion 11 of the lower side shell 10, and solidifying the material.

As a raw material of the holding portion 30 formed by injection molding, a resin material excellent in heat resistance, durability, corrosion resistance, and the like after curing is suitably selected and used. In this case, the raw material is not limited to a thermosetting resin typified by an epoxy resin or the like, and a thermoplastic resin typified by a polybutylene terephthalate resin, a polyethylene terephthalate resin, a polyamide resin (for example, nylon 6, nylon 66, or the like), a polypropylene sulfide resin, a polypropylene oxide resin, or the like can also be used. In a case where these thermoplastic resins are selected as raw materials, it is preferable to contain glass fibers or the like as fillers in these resin materials in order to secure mechanical strength of the holding portion 30 after molding. However, in a case where sufficient mechanical strength can be secured only by the thermoplastic resin, it is not necessary to add the filler as described above.

The holding portion 30 includes an inner covering portion 31 that covers a part of the inner surface of the bottom plate portion 11 of the lower side shell 10, an outer covering portion 32 that covers a part of the outer surface of the bottom plate portion 11 of the lower side shell 10, and a connecting portion 33 that is located in the opening portion 15 provided in the bottom plate portion 11 of the lower side shell 10 and is continuous with each of the inner covering portion 31 and the outer covering portion 32.

The holding portion 30 is fixed to the bottom plate portion 11 on a surface of each of the inner covering portion 31, the outer covering portion 32, and the connecting portion 33 on a side of the bottom plate portion 11. Furthermore, the holding portion 30 is fixed to a side surface and a lower surface of a portion near the lower end of the ignition portion 41 of the igniter 40 and a surface of a portion near the upper end of the terminal pins 42 of the igniter 40.

As a result, the opening portion 15 is completely embedded by the terminal pins 42 and the holding portion 30, and the sealability at the portion is secured, whereby the airtightness of the space inside the housing is secured. Note that since the opening portion 15 is formed in a non-point-symmetric shape in plan view as described above, by embedding the opening portion 15 with the connecting portion 33, the opening portion 15 and the connecting portion 33 also function as a whirl-stop mechanism that prevents the holding portion 30 from rotating with respect to the bottom plate portion 11.

The female connector portion 34 is formed in a portion of the holding portion 30 facing the outside of the outer covering portion 32. The female connector portion 34 is a portion for receiving a male connector (not illustrated) of a harness for connecting the igniter 40 and a control unit (not illustrated), and is located in the recessed portion 14 provided in the bottom plate portion 11 of the lower side shell 10.

In the female connector portion 34, a portion close to the lower end of the terminal pin 42 of the igniter 40 is disposed to be exposed. The male connector is inserted into the female connector portion 34, whereby electrical conduction between the core wire of the harness and the terminal pin 42 is realized.

Furthermore, the injection molding described above may be performed using the lower side shell 10 in which an adhesive layer is provided in advance at a predetermined position on the surface of the bottom plate portion 11 of the portion to be covered by the holding portion 30. The adhesive layer can be formed by previously applying an adhesive to a predetermined position of the bottom plate portion 11 and curing the adhesive.

In this way, since the cured adhesive layer is located between the bottom plate portion 11 and the holding portion 30, the holding portion 30 formed of the resin molded portion can be more firmly fixed to the bottom plate portion 11. Therefore, when the adhesive layer is annularly provided along a circumferential direction so as to surround the opening portion 15 provided in the bottom plate portion 11, higher sealability can be secured at the portion.

Here, as the adhesive applied to the bottom plate portion 11 in advance, an adhesive containing a resin material excellent in heat resistance, durability, corrosion resistance and the like after curing as a raw material is suitably used, and for example, an adhesive containing a cyanoacrylate resin or a silicone resin as a raw material is particularly suitably used. Note that in addition to the above-described resin material, a material containing, as a raw material, a phenolic resin, an epoxy resin, a melamine resin, a urea resin, a polyester resin, an alkyd resin, a polyurethane resin, a polyimide resin, a polyethylene resin, a polypropylene resin, a polyvinyl chloride resin, a polystyrene resin, a polyvinyl acetate resin, a polytetrafluoroethylene resin, an acrylonitrile butadiene styrene resin, an acrylonitrile styrene resin, an acrylic resin, a polyamide resin, a polyacetal resin, a polycarbonate resin, a polyphenylene ether resin, a polybutylene terephthalate resin, a polyethylene terephthalate resin, a polyolefin resin, a polyphenylene sulfide resin, a polysulfone resin, a polyether sulfone resin, a polyarylate resin, a polyether ether ketone resin, a polyamide imide resin, a liquid crystal polymer, a styrene rubber, an olefin rubber, or the like may be used, and it can be used as the adhesive described above.

Note that, here, a configuration example in a case where the igniter 40 can be fixed to the lower side shell 10 by injection molding the holding portion 30 including the resin molding portion has been exemplified. However, other alternative means can be used for fixing the igniter 40 to the lower side shell 10.

The cup-shaped member 50 is assembled to the bottom plate portion 11 so as to cover the protruding cylinder portion 13, the holding portion 30, and the igniter 40. The cup-shaped member 50 has a bottomed substantially cylindrical shape in which an end portion on a side of the bottom plate portion 11 is opened, and includes a space in which the enhance agent 59 is accommodated. The cup-shaped member 50 is disposed so as to protrude toward the inside of the combustion chamber 60 containing the gas generating agent 61 such that a space provided inside the cup-shaped member faces the ignition portion 41 of the igniter 40.

The cup-shaped member 50 includes a top wall portion 51, a cylindrical side wall portion 52 extending from a peripheral edge of the top wall portion 51 toward the bottom plate portion 11, and an extension portion 53 extending radially outward from an opening end which is an end portion of the side wall portion 52 on a side of the bottom plate portion 11.

The extension portion 53 is formed to extend along the inner surface of the bottom plate portion 11 of the lower side shell 10. Specifically, the extension portion 53 has a shape bent along the shape of an inner bottom surface of the bottom plate portion 11 at the portion where the protruding cylinder portion 13 is provided and in the vicinity thereof, and includes a distal end portion 54 extending in a flange shape at a radially outer portion thereof.

The distal end portion 54 of the extension portion 53 is disposed between the bottom plate portion 11 and the lower support member 70 along the axial direction of the housing, and is thereby sandwiched between the bottom plate portion 11 and the lower support member 70 along the axial direction of the housing. Therefore, the cup-shaped member 50 is fixed to the bottom plate portion 11 with the distal end portion 54 of the extension portion 53 pressed toward the bottom plate portion 11 by the lower support member 70. Therefore, it is possible to prevent the cup-shaped member 50 from falling off from the bottom plate portion 11 without using caulking fixation or press-fitting fixation for fixing the cup-shaped member 50.

The cup-shaped member 50 does not have an opening in either the side wall portion 52 or the top wall portion 51, and surrounds a space provided therein. In a case where the igniter 40 is activated to ignite the enhance agent 59 in an enhancer chamber 57, the cup-shaped member 50 bursts, deforms, or melts with an increase in pressure in a space inside the cup-shaped member or conduction of generated heat.

As a material of the cup-shaped member 50, a member made of metal such as stainless steel, steel, aluminum, an aluminum alloy, stainless steel, or a stainless alloy, or a member made of resin such as thermosetting resin typified by epoxy resin or the like, polybutylene terephthalate resin, polyethylene terephthalate resin, polyamide resin (for example, nylon 6, nylon 66, or the like), polypropylene sulfide resin, or thermoplastic resin typified by polypropylene oxide resin is suitably used. In particular, an aluminum alloy or an iron-based metal material such as stainless steel or steel having a mechanical strength relatively higher than that of aluminum is preferable.

Note that the method of fixing the cup-shaped member 50 is not limited to the fixing method using the lower support member 70 described above, and other fixing methods may be used.

The enhance agent 59 filled in the enhancer chamber 57 is ignited by flame generated by the activation of the igniter 40, and generates heat particles by burning. As the enhance agent 59, it is necessary to be able to reliably start combustion of the gas generating agent 61, and in general, a composition composed of metal powder/oxidizing agent represented by B/KNO₃, B/NaNO₃, Sr(NO₃)₂, or the like, a composition composed of titanium hydride/potassium perchlorate, a composition composed of B/5-aminotetrazole/potassium nitrate/molybdenum trioxide, or the like is used.

The enhance agent 59 may be in powder form or formed into a predetermined shape using a binder. Examples of the shape of the enhance agent 59 formed by the binder include various shapes such as a granular shape, a columnar shape, a sheet shape, a spherical shape, a single-hole cylindrical shape, a porous cylindrical shape, and a tablet shape.

In the space surrounding the portion where the cup-shaped member 50 is disposed in the space inside the housing, the combustion chamber 60 accommodating the gas generating agent 61 is located. Specifically, as described above, the cup-shaped member 50 is disposed so as to protrude into the combustion chamber 60 formed inside the housing, and the space provided in the portion facing the outer surface of the top wall portion 51 of the cup-shaped member 50 and the space provided in the portion facing the outer surface of the side wall portion 52 are configured as the combustion chamber 60. As a result, the gas generating agent 61 is disposed adjacent to the outer surface of the cup-shaped member 50.

Furthermore, in a space surrounding the combustion chamber 60 containing the gas generating agent 61 in the radial direction of the housing, a filter 90 is disposed along the inner circumference of the housing. The filter 90 has a cylindrical shape and is disposed such that its central axis substantially coincides with the axial direction of the housing.

The gas generating agent 61 is a chemical agent that is ignited by heat particles generated by the enhance agent 59 and burns to generate gas at the time of activation of the igniter 40. As the gas generating agent 61, a non-azide gas generating agent is preferably used, and the gas generating agent 61 is generally formed as a molded body containing a fuel, an oxidizing agent, and an additive.

As the fuel, for example, a triazole derivative, a tetrazole derivative, a guanidine derivative, an azodicarbonamide derivative, a hydrazine derivative, or the like, or a combination thereof is used. Specifically, for example, nitroguanidine, guanidine nitrate, cyanoguanidine, 5-aminotetrazole, or the like is suitably used.

Examples of the oxidizing agent include basic metal nitrates such as basic copper nitrate, basic metal carbonates such as basic copper carbonate, perchlorates such as ammonium perchlorate and potassium perchlorate, and nitrates containing cations selected from alkali metals, alkaline earth metals, transition metals, and ammonia. As the nitrate, for example, sodium nitrate, potassium nitrate or the like is suitably used.

Examples of the additive include a binder, a slag forming agent, and a combustion adjusting agent. As the binder, for example, an organic binder such as polyvinyl alcohol, a metal salt of carboxymethyl cellulose, or a stearate, or an inorganic binder such as synthetic hydrotalcite or acidic clay can be suitably used. Furthermore, as the binder, polysaccharide derivatives such as hydroxyethyl cellulose, hydroxypropyl methyl cellulose, cellulose acetate, cellulose propionate, cellulose acetate butyrate, nitrocellulose, microcrystalline cellulose, guar gum, polyvinyl pyrrolidone, polyacrylamide, and starch, and inorganic binders such as molybdenum disulfide, talc, bentonite, diatomaceous earth, kaolin, and alumina can also be suitably used. As the slag forming agent, silicon nitride, silica, acid clay, and the like can be suitably used. As the combustion adjusting agent, metal oxide, ferrosilicon, activated carbon, graphite, and the like can be suitably used.

The shape of the molded body of the gas generating agent 61 includes various shapes such as a granular shape, a pellet shape, a cylindrical shape, and the like, and a disk shape. Furthermore, as the cylindrical molded body, a porous (for example, a single-hole cylindrical shape, a porous cylindrical shape, or the like) molded body having a through hole in the molded body is also used. These shapes are preferably appropriately selected according to the specifications of the airbag apparatus in which the disk-type gas generator 100 is incorporated, and it is preferable to select an optimum shape according to the specifications, for example, a shape in which the gas generation speed changes with time at the time of combustion of the gas generating agent 61 is selected. Furthermore, in addition to the shape of the gas generating agent 61, it is preferable to appropriately select the size and the filling amount of the molded body in consideration of the combustion speed, the pressure index, and the like of the gas generating agent 61.

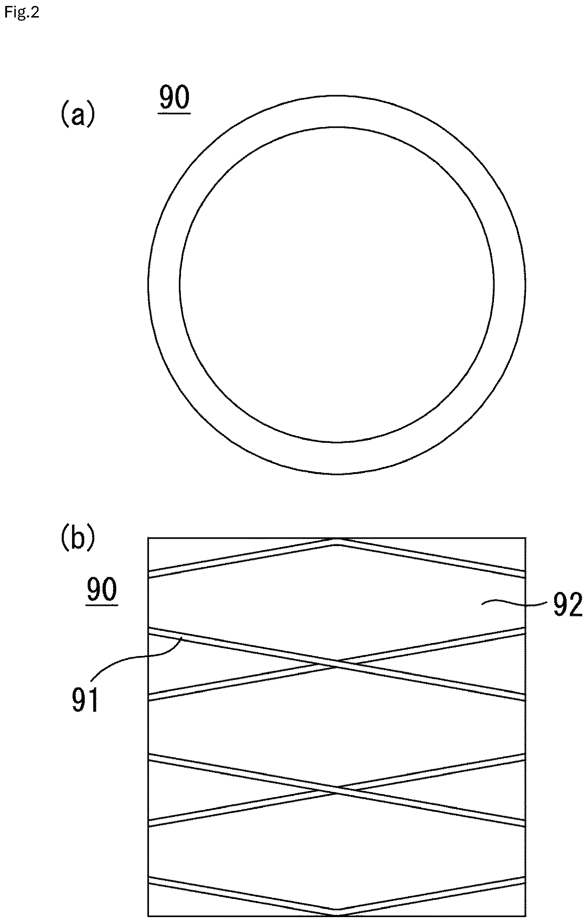

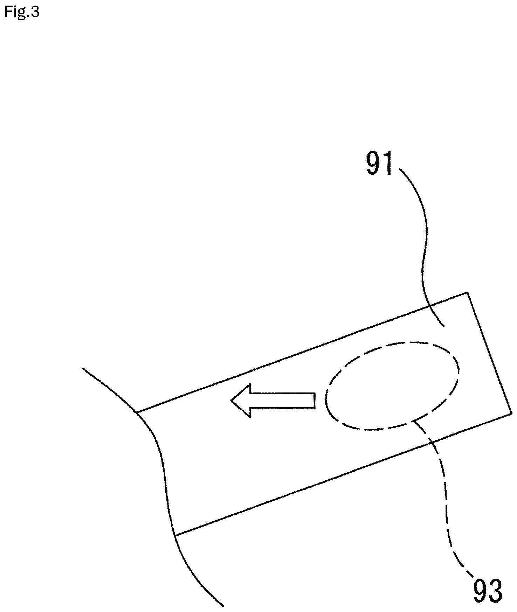

As illustrated in FIG. 2, the filter 90 is formed in a cylindrical body having a stitch in which at least one element wire (for example, a metal wire material 91 such as stainless steel or steel) forming a plurality of layers in the radial direction overlaps each other, and is not sintered. Specifically, the filter 90 is formed in a hollow cylindrical shape by setting a predetermined pitch, a winding width, a crossing angle, and the like on a cylindrical bobbin (not illustrated) serving as a shaft member, winding the metal wire material 91 in a spiral shape to form a stitch, and then pulling out the bobbin. Furthermore, the terminal end portion of the metal wire material 91 as the outermost layer among the plurality of layers is joined at the adhesive portion 93 by being adhered to a part of the adjacent layer 92 on a radially inner side with respect to the outermost layer without being subjected to heat treatment (see FIG. 3; the adjacent layer is not shown in FIG. 3). Note that not only the terminal end portion of the metal wire material 91 of the outermost layer but also one or more portions other than the terminal end portion of the metal wire material 91 of the outermost layer may be adhered to the adjacent layer 92. As a result, even if the terminal end portion of the metal wire material 91 of the outermost layer is detached, it is possible to prevent the metal wire material 91 forming the filter 90 from being melted. Furthermore, in the filters in other embodiments and modifications described later, similarly, not only the terminal end portion of the metal wire material of the outermost layer but also one or more portions of any portion other than the terminal end portion of the metal wire material of the outermost layer may be adhered to the adjacent layer.

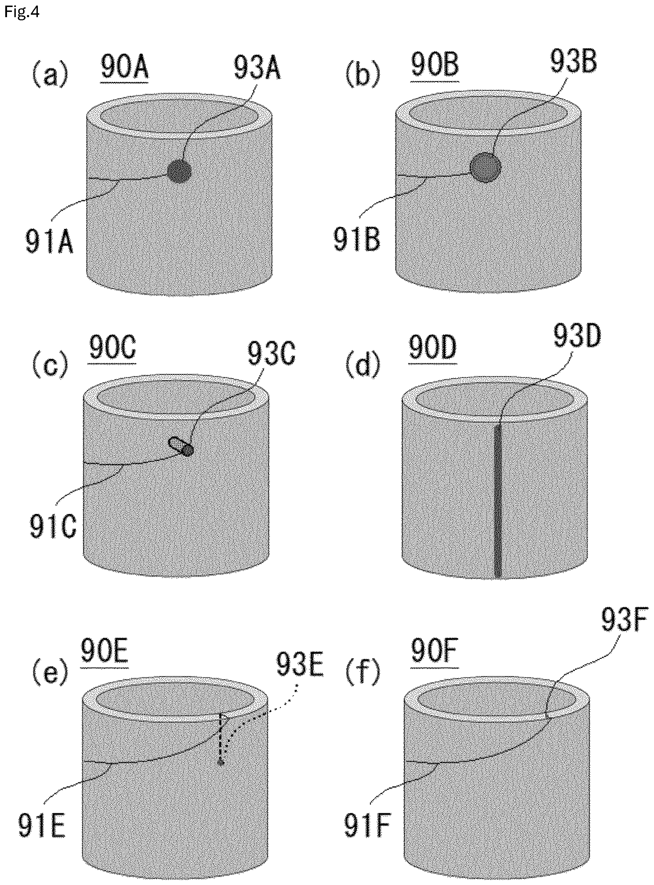

Note that any means of adhesion may be used, but adhesion by welding is preferable. Here, examples of the means of welding and the welding position include the following. Examples of the welding method include wide range welding with a large electrode on the outer surface side of a filter 90A (see an adhesive portion 93A in FIG. 4(a)), wide range welding with a metal patch on the outer surface side of a filter 90B (see an adhesive portion 93B in FIG. 4(b)), through welding to penetrate from the outer diameter side to the inner diameter side of a filter 90C (see an adhesive portion 93C in FIG. 4(c)), seamless welding on the outer surface side of a filter 90D (see an adhesive portion 93D in FIG. 4(d)), welding to the innermost layer by drawing the terminal end of the metal wire material 91 of the outermost layer of a filter 90E to the inner surface side via the axial end portion (see an adhesive portion 93E in FIG. 4(e)), and welding to a part of either one of axial end portions of a filter 90F (see an adhesive portion 93F in FIG. 4(f).

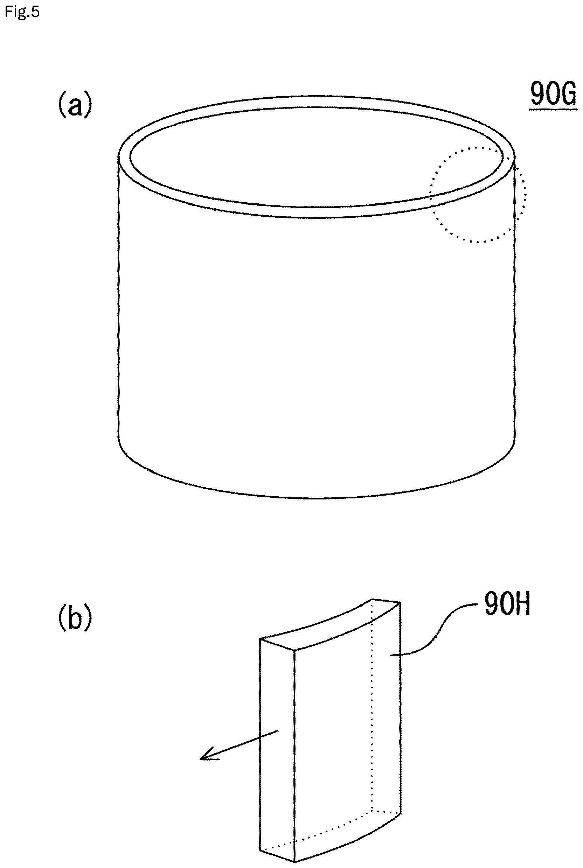

Furthermore, a joining strength of the terminal end portion (adhesive portion 93) is preferably 5 N or more, and the reason therefor will be described below with reference to FIGS. 3 and 5. Here, FIG. 5(a) is a diagram illustrating a cylinder model 90G (assumed to correspond to the filter 90) for calculating a load applied to the adhesive portion 93, and FIG. 5(b) is an enlarged cutaway view of a portion 90H of a portion surrounded by a dotted line in FIG. 5(a).

In the gas generator 100, the gas generated inside the filter 90 is discharged through a gas ejection port 23 via the filter 90. Therefore, during activation of the gas generator 100, the filter 90 is under pressure (internal pressure) from the inner diameter side toward the outside until the inside is in equilibrium with the external atmosphere. At this time, the load applied to the adhesive portion 93 is calculated from a calculation formula of the stress (hoop stress) generated in the cylindrical model of FIG. 5 in a case where the pressure (internal pressure) is applied.

### [Main stress generated in cylinder]

σθ (circumferential stress: generated in arrow direction in FIG. 5(b)) = (D (inner diameter: mm) × P (differential pressure between inside and outside of filter 90 during upper limit output at the time of high-temperature activation: MPa))/(2 × T (thickness of filter 90: mm))

### [Load applied to adhesive portion 93]

Fθ (generated in direction of outlined arrow in FIG. 3) = σθ × A (cross-sectional area of metal wire material 91: mm²)

Here, how the load applied to the adhesive portion 93 changes depending on conditions in a case where the diameter of the metal wire material 91 is 0.4 mm was calculated using the above calculation formula. Note that the hoop stress calculation formula calculates the stress generated in the cross section of the cylinder of the cylinder model. However, since the filter 90 is a winding filter, the cross section is rough (not dense), and it is necessary to correct the calculation formula of the hoop stress on the assumption of a state where the density is lower than that of the uniform cylinder illustrated in FIG. 5. Therefore, the density ratio is calculated from the actual weight of the filter 90 with respect to the weight in the case of a uniform cylinder, and a correction coefficient is set for the thickness in order to make the thickness of the cylinder small (state where the cross-sectional area is small) by the ratio. The condition (two patterns) and each result are as shown in Table 1 below.

**[Table 1]**

| CONDITION ITEM | CONDITION VALUE | | REMARKS |
|---|---|---|---|
| NUMBER OF MOLES OF GENERATED GAS [mol] | 3 | 1.3 | |
| FILTER INNER DIAMETER [mm] | 50 | 43 | |
| FILTER THICKNESS [mm] | 5 | 4 | |
| THICKNESS CORRECTION COEFFICIENT | 0.3 | 0.3 | |
| DIFFERENTIAL PRESSURE [MPa] | 2 | 2 | DIFFERENTIAL PRESSURE BETWEEN INSIDE AND OUTSIDE OF FILTER 90 (ACTUAL VALUE) |
| WIRE MATERIAL CROSS-SECTIONAL AREA [mm²] | 0.126 | 0.126 | USE WIRE MATERIAL WITH DIAMETER OF 0.4 mm |
| *σθ* [MPa] | 33.3 | 35.8 | |
| F*θ* [N] | 4.2 | 4.5 | |

From the above results, it can be seen that the load applied to the adhesive portion 93 slightly varies depending on the number of moles of the generated gas, but when the adhesive portion 93 has a welding strength of about 5 N, it can withstand the load applied to the adhesive portion 93 at the time of activation. Therefore, the joining strength of the adhesive portion 93 is preferably 5 N or more. The filter 90 having these configurations has shape retainability similar to that of the related art even if it is not heat-treated. Furthermore, since it is only necessary to adhere the adhesive portion 93, the filter 90 can be manufactured more easily than before.

Furthermore, the filter 90 functions as a cooling means that cools the gas by depriving high temperature heat of the gas when the gas generated in the combustion chamber 60 passes through the filter 90, and also functions as a removal means that removes residues (slag) and the like contained in the gas. Therefore, in order to sufficiently cool the gas and prevent the residue from being released to the outside, it is necessary to ensure that the gas generated in the combustion chamber 60 passes through the filter 90. Note that the filter 90 is disposed apart from the circumferential wall portions 12 and 22 so that a gap portion 28 having a predetermined size is formed between the circumferential wall portion 12 of the lower side shell 10 and the circumferential wall portion 22 of the upper side shell 20 constituting the circumferential wall portion of the housing.

The circumferential wall portion 22 of the upper side shell 20 in a portion facing the filter 90 is provided with a plurality of the gas ejection ports 23. The plurality of gas ejection ports 23 is for leading out the gas that has passed through the filter 90 to the outside of the housing.

Furthermore, a metallic sealing tape 24 as a seal member is attached to the inner circumferential surface of the circumferential wall portion 22 of the upper side shell 20 so as to close the plurality of gas ejection ports 23. As the sealing tape 24, an aluminum foil or the like having one surface coated with an adhesive member can be suitably used, and airtightness of the combustion chamber 60 is secured by the sealing tape 24.

In the combustion chamber 60, the lower support member 70 is disposed in the vicinity of an end portion located on a side of the bottom plate portion 11. The lower support member 70 has an annular shape, and is disposed substantially in contact with the filter 90 and the bottom plate portion 11 so as to cover a boundary portion between the filter 90 and the bottom plate portion 11.

The lower support member 70 includes an annular plate-shaped base portion 71 fitted to the bottom plate portion 11 along the inner bottom surface of the bottom plate portion 11, an abutment portion 72 abutting on the inner circumferential surface of the filter 90 near the bottom plate portion 11, and a cylindrical erected portion 73 erected from the base portion 71 toward the top plate portion 21. The abutment portion 72 extends from the outer edge of the base portion 71, and the erected portion 73 extends from the inner edge of the base portion 71. The erected portion 73 covers the outer circumferential surface of the protruding cylinder portion 13 of the lower side shell 10 and the outer circumferential surface of the inner covering portion 31 of the holding portion 30 via the extension portion 53 of the cup-shaped member 50.

The lower support member 70 is a member for fixing the filter 90 to the housing, and also functions as an outflow preventing means for preventing the gas generated in the combustion chamber 60 from flowing out from the gap between the lower end of the filter 90 and the bottom plate portion 11 without passing through the inside of the filter 90 at the time of activation of the igniter 40. Therefore, the lower support member 70 is formed by, for example, pressing a plate-like member made of metal, and is preferably formed of a member made of a steel plate (for example, a cold-rolled steel plate, a stainless steel plate, or the like) such as ordinary steel or special steel.

The upper support member 80 is disposed at an end portion of the combustion chamber 60 located on a side of the top plate portion 21. The upper support member 80 has a substantially disk shape, and is disposed to be fitted to the filter 90 and the top plate portion 21 so as to cover a boundary portion between the filter 90 and the top plate portion 21. As a result, the upper support member 80 is located between the top plate portion 21 and the gas generating agent 61 in the vicinity of the end portion of the combustion chamber 60.

The upper support member 80 includes a base portion 81 abutting on the top plate portion 21 and an abutment portion 82 erected from a peripheral edge of the base portion 81. The abutment portion 82 is in contact with an inner circumferential surface of an axial end portion of the filter 90 located on the side of the top plate portion 21.

The upper support member 80 is a member for fixing the filter 90 to the housing, and also functions as an outflow preventing means for preventing the gas generated in the combustion chamber 60 from flowing out from the gap between the upper end of the filter 90 and the top plate portion 21 without passing through the inside of the filter 90 at the time of activation of the igniter 40. Therefore, the upper support member 80 is formed by, for example, pressing a plate-like member made of metal, and is preferably formed of a member made of a steel plate (for example, a cold-rolled steel plate, a stainless steel plate, or the like) such as ordinary steel or special steel.

An annular plate-shaped cushion material 85 is disposed inside the base portion 81 of the upper support member 80 so as to be in contact with the gas generating agent 61 accommodated in the combustion chamber 60. The cushion material 85 is provided for the purpose of preventing the gas generating agent 61 formed of a molded body from being pulverized by vibration or the like, and is preferably formed of a molded body of a ceramic fiber or a member formed of rubber or the like typified by rock wool, foamed resin (for example, foamed silicone, foamed polypropylene, foamed polyethylene, foamed urethane, and the like), chloroprene, and EPDM.

Here, the cushion material 85 is located between the top plate portion 21 and the gas generating agent 61 in a portion of the combustion chamber 60 on the side of the top plate portion 21. Therefore, the gas generating agent 61 is pressed toward the bottom plate portion 11 side by the cushion material 85.

Next, with reference to FIG. 1, a procedure of assembling work of the disk-type gas generator 100 in the present embodiment will be described.

First, in the lower side shell 10, the igniter 40 is fixed by being injection molded as the holding portion 30 including the resin molding portion. Then, the side wall portion 52 of the cup-shaped member 50 in which the enhance agent 59 is accommodated is fixed by press-fitting into the holding portion 30 of the lower side shell 10. Next, the lower support member 70 is placed on the distal end portion 54 of the extension portion 53 of the cup-shaped member 50, and the filter 90 is inserted and disposed toward the inner bottom surface of the lower side shell 10.

Then, the inside of the filter 90 is filled with the gas generating agent 61, the cushion material 85 is disposed on the inner surface of the base portion 81 of the upper support member 80, and the upper support member 80 is inserted into the upper end portion of the filter 90. Thereafter, the upper side shell 20 in which the gas ejection port 23 is closed by the sealing tape 24 is covered with the lower side shell 10, and the lower side shell 10 and the upper side shell 20 are welded. Thus, the assembly of the disk-type gas generator 100 having the structure illustrated in FIG. 1 is completed.

Here, in the disk-type gas generator 100 according to the present embodiment, since the cup-shaped member 50 is not provided with an opening, a process of filling the enhance agent 59 into the enhancer chamber 57 provided inside the cup-shaped member 50 can be performed very easily. This is because the cup-shaped member 50 itself is made of a fragile member having low mechanical strength so that a part of the cup-shaped member ruptures, deforms, or melts at the time of activation of the disk-type gas generator 100. That is, the work of closing the opening provided in the cup-shaped member to fill the enhance agent 59, which is necessary in the case of using the cup-shaped member having the opening, for example, an aluminum tape or a closing plate is unnecessary, and thus the manufacturing process can be greatly simplified.

Next, an operation of the disk-type gas generator 100 according to the present exemplary embodiment will be described.

Referring to FIG. 1, in a case where a vehicle on which the disk-type gas generator 100 is mounted collides, collision is detected by collision detection means separately provided in the vehicle, and based on this, the igniter 40 is operated by energization from a control unit separately provided in the vehicle. The enhance agent 59 accommodated in the enhancer chamber 57 is ignited by flame generated by the activation of the igniter 40 to start combustion.

At this time, immediately after the igniter 40 is activated, the ignition agent loaded in the ignition portion 41 is rapidly combusted, so that the squib cup of the ignition portion 41 is ruptured, and heat generated by the rapid combustion of the ignition agent is transmitted to the enhance agent 59 filled in the enhancer chamber 57.

Subsequently, when the thrust reaches the top wall portion 51 of the cup-shaped member 50, the cup-shaped member 50 made of a fragile member ruptures, deforms, or melts. The rupture, deformation, or melting of the cup-shaped member 50 occurs later than the ignition of the enhance agent 59 by the heat particles generated by the combustion of the ignition agent. Here, the enhance agent 59 of the cup-shaped member 50 is scattered and dispersed inside the cup-shaped member 50 by receiving the thrust generated by the combustion of the ignition agent.

Therefore, the enhance agent 59 located at a position far from the igniter 40 is also ignited by the heat particles in a short time and starts combustion thereof, and as a result, the pressure increase in the space inside the cup-shaped member 50 and the temperature increase in the space are greatly promoted. As a result, the cup-shaped member 50 ruptures, deforms, or melts in a short time, and a large amount of heat particles generated by the combustion of the enhance agent 59 flows into the combustion chamber 60 at an early stage.

In this way, when a large amount of heat particles generated by the enhance agent 59 and the enhance agent 59 flow into the combustion chamber 60, the gas generating agent 61 accommodated in the combustion chamber 60 is ignited and burned, and a large amount of gas is generated. The gas generated in the combustion chamber 60 passes through the inside of the filter 90, and at that time, the heat is deprived by the filter 90 and cooled, and the slag contained in the gas is removed by the filter 90 and flows into the gap portion 28.

Then, as the pressure in the space inside the housing increases due to the combustion of the gas generating agent 61, the sealing tape 24 closing the gas ejection port 23 provided in the upper side shell 20 is cleaved, and the gas is ejected to the outside of the housing through the gas ejection port 23. The ejected gas is introduced into an airbag provided adjacent to the disk-type gas generator 100, and inflates and deploys the airbag.

Note that in a case where the cup-shaped member 50 is made of iron or stainless steel, since the strength is higher than that when the cup-shaped member 50 is made of aluminum, rupture, deformation, or melting of the cup-shaped member 50 does not occur at the initial stage of combustion of the enhance agent 59. At this time, the internal pressure of the cup-shaped member 50 increases until a predetermined time in which rupture, deformation, or melting of the cup-shaped member 50 occurs elapses. Then, after the internal pressure reaches a certain level or more, the cup-shaped member 50 ruptures, deforms, or melts. Therefore, by increasing the mechanical strength using an iron-based metal material having high mechanical strength such as iron or stainless steel for the cup-shaped member 50, the combustion of the enhance agent 59 can be sufficiently promoted at the time of cleavage of the cup-shaped member 50, and the cup-shaped member 50 can be cleaved. Such improvement of the mechanical strength of the cup-shaped member 50 can be realized by increasing the thickness even when a metal having low strength such as aluminum is used. The thickness in this case is preferably 0.4 mm or more and 1.5 mm or less, and more preferably 0.6 mm or more and 1.2 mm or less.

As described above, since it is only necessary to adhere the adhesive portion 93, the filter 90 can be more easily manufactured than in the related art.

Furthermore, in a case where the joining strength of the adhesive portion 93 is 5 N or more, the filter 90 can have shape retainability similar to that of the related art even if the filter is not subjected to heat treatment. In particular, it is possible to prevent the adhesive portion 93 from being broken at the time of assembly and at the time of activation.

### <Second embodiment>

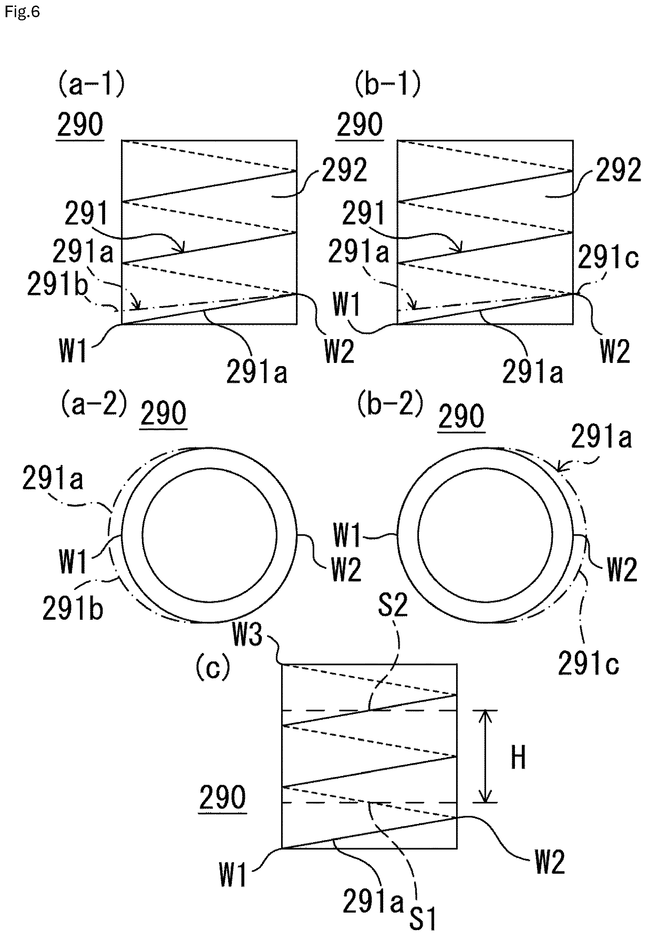

Next, a second embodiment of the present invention will be described in detail with reference to the drawings. Note that since a gas generator of the present embodiment is similar to the first embodiment except for the filter 90 and the lower side shell 10 forming the housing, description and illustration of similar portions are omitted, and a filter 190 used in the present embodiment illustrated in FIG. 6 will be described except for points to be particularly described. Furthermore, the last two digits of the reference signs in the present embodiment and the reference signs in the above embodiment are the same members unless otherwise specified, and thus the description thereof will be omitted. FIG. 6(a-1) is a side view illustrating a state in one process at the time of assembling the filter 190, FIG. 6(a-2) is a top view of the filter 190 in FIG. 6(a-1), FIG. 6(b-1) is a side view illustrating a state in one process at the time of assembling the filter 190 after FIG. 6(a-1), and FIG. 6(b-2) is a top view of the filter 190 in FIG. 6(b-1).

The filter 190 is formed by spirally winding a metal wire material 191 around two turns per layer from one axial end portion to the other axial end portion, and is not sintered. Furthermore, the filter 190 is different from the filter 90 of the first embodiment mainly in that the terminal end portion of the metal wire material 191 of the outermost layer is adhered to the adjacent layer to form an adhesive portion in the region H (see FIG. 6(c)) by the same adhesion means as in the first embodiment.

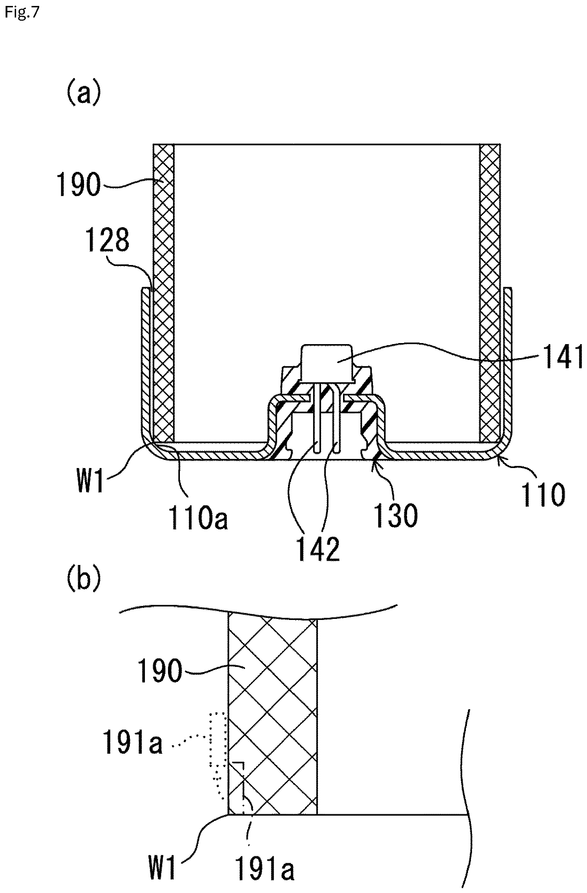

Note that in the gas generator of the present embodiment, the space corresponding to the gap portion 28 between the lower side shell 10 and the filter 90 of the first embodiment is reduced in order to be smaller and lighter than the first embodiment, and for example, a gap portion 128 is provided between the filter 190 and a lower side shell 110 as illustrated in FIG. 7(a). In such a case, as illustrated in FIG. 7(a), a corner portion W1 may ride on an R-shaped portion 110a inside the lower side shell 110. In a case where the upper shell is assembled in this state in the same manner as in the first embodiment, a load is applied only to the corner portion W1. At this time, as illustrated in FIG. 7(b), a part 191a (one-dot chain line) of the metal wire material 191 located at the corner portion W1 is pushed upward, and may be shifted to a position indicated by a dotted line. In a case where the deviation occurs, when there is an adhesive portion of the metal wire material 191 in the vicinity of the deviation or within a certain distance, a force (load) to shear the adhesive portion in the axial direction of the filter 190 or peel the adhesive portion in the outer diameter direction may be applied.

In a case where such a force is applied to the adhesive portion and the part 191a of the metal wire material 191 is pushed up, since the metal wire material 191 is spirally wound, the winding angle changes (see the position of the part 191a of the metal wire material 191 indicated by the one-dot chain line in FIG. 6(a-1)), and the surplus portion 191b as illustrated in FIGS. 6(a-1) and 6(a-2) is generated. Then, when the surplus portion 191b is pushed by the R-shaped portion 110a (see FIG. 7(a)) inside the lower side shell 110, as illustrated in FIGS. 6(b-1) and 6(b-2), the part 191a of the metal wire material 191 moves in the direction of a portion W2 of the filter 190, and the surplus portion 191b disappears, but the surplus portion 191c is generated. When there is an adhesive portion of the metal wire material 191 in the vicinity of the surplus portion 191c (portion W2 of the filter 190) or within a certain distance, a force (load) to peel off in the outer diameter direction is applied to the adhesive portion.

Therefore, a region where the metal wire material 191 circles 0 to 0.25 around the contact position (corner portion W1) with the R-shaped portion 110a inside the lower side shell 110 is an influence range of the push-up of the part 191a of the metal wire material 191. Furthermore, a region where the metal wire material 191 makes 0.25 to 0.75 turns from the contact position (corner portion W1) with the R-shaped portion 110a inside the lower side shell 110 is an influence range of the surplus portion 191c of the metal wire material 191. That is, it is not preferable to provide the adhesive portion in a region (a region from the lower end portion to a height S1) where the metal wire material 191 makes 0 to 0.75 turns with the contact position with the R-shaped portion 110a inside the lower side shell 110 (the corner portion W1 in FIG. 6(c)) as a base point.

Furthermore, since the top and bottom (upper and lower) of the filter 190 are not defined in many cases in consideration of manufacturability of the gas generator, a similar event may occur at any end of the axial end portion. Therefore, it is not preferable to provide the adhesive portion in a region (a region from the upper end portion to a height S2) where the metal wire material 191 makes 0 to 0.75 turns with a corner portion W3 of FIG. 6(c) as a base point.

Therefore, in the filter 190, in the region H (see FIG. 6(c)), the terminal end portion of the metal wire material 191 of the outermost layer is adhered to the adjacent layer to form an adhesive portion. That is, the adhesive portion is disposed at a position of 25% in the axial middle of a filter 290 (± 12.5% with respect to the central axis).

With the above configuration, in order to reduce the size and weight as compared with the first embodiment, even if the space corresponding to the gap portion 28 between the lower side shell 10 and the filter 90 of the first embodiment is reduced, and for example, the gap portion 128 is provided between the filter 190 and the lower side shell 110 as illustrated in FIG. 7(a), it is possible to prevent the adhesive portion of the filter 190 from being broken at the time of assembly and at the time of activation. That is, the filter 190 can have shape retainability similar to that of the related art even if it is not subjected to heat treatment.

### <Modification of second embodiment>

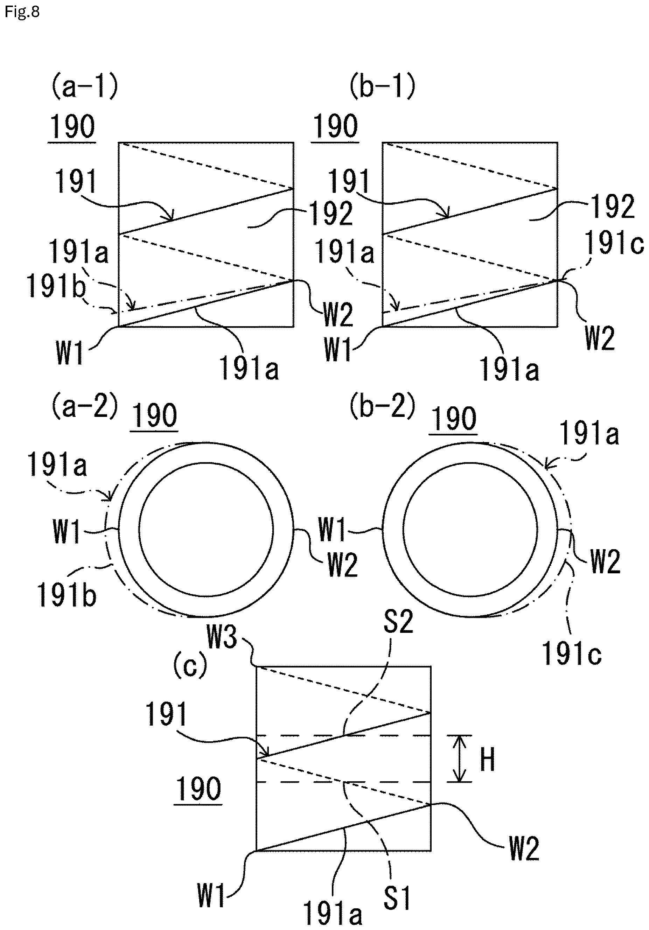

Here, a modification of the second embodiment of the present invention will be described in detail with reference to the drawings. Note that since the gas generator of the present embodiment is similar to the first embodiment except for the filter 90 and the lower side shell 10 forming the housing, description and illustration of similar portions are omitted, and the filter 290 used in the present embodiment illustrated in FIG. 8 will be described except for points to be particularly described. Furthermore, the last two digits of the reference signs in the present modification and the reference signs in the first embodiment are the same members unless otherwise specified, and thus the description thereof will be omitted. FIG. 8(a-1) is a side view illustrating a state in one process at the time of assembling the filter 290, FIG. 8(a-2) is a top view of the filter 290 in FIG. 8(a-1), FIG. 8(b-1) is a side view illustrating a state in one process at the time of assembling the filter 290 after FIG. 8(a-1), and FIG. 8(b-2) is a top view of the filter 290 in FIG. 8(b-1).

The filter 290 is formed by spirally winding a metal wire material 291 around three turns per layer from one axial end portion to the other axial end portion, and is not sintered. Furthermore, the filter 290 is different from the filter 90 of the first embodiment mainly in that the terminal end portion of a metal wire material 291 of the outermost layer is adhered to the adjacent layer to form an adhesive portion in a region H (see FIG. 8(c)) by the same adhesion means as in the first embodiment.

In the same manner as in the second embodiment of the present invention, the region where the metal wire material 291 makes 0 to 0.25 turns from a contact position (corner portion W1) with the R-shaped portion inside the lower side shell of the gas generator is an influence range of the push-up of a part 291a of the metal wire material 291. Furthermore, a region where the metal wire material 291 makes 0.25 turns to 0.75 turns with the contact position (corner portion W1) with the R-shaped portion inside the lower side shell as a base point is an influence range of a surplus portion 291c of the metal wire material 291. That is, it is not preferable to provide the adhesive portion in a region (a region from the lower end portion to a height S1) where the metal wire material 291 makes 0 to 0.75 turns with the contact position with the R-shaped portion inside the lower side shell (the corner portion W1 in FIG. 8(c)) as a base point.

Furthermore, since the top and bottom (upper and lower) of the filter 290 are not defined in many cases in consideration of manufacturability of the gas generator, a similar event may occur at any end of the axial end portion. Therefore, it is not preferable to provide the adhesive portion in a region (a region from the upper end portion to a height S2) where the metal wire material 291 makes 0 to 0.75 turns with the corner portion W3 in FIG. 8(c) as a base point.

Therefore, in the filter 290, in a region H (see FIG. 8(c)), the terminal end portion of the metal wire material 291 of the outermost layer is adhered to the adjacent layer to form an adhesive portion. That is, the adhesive portion is disposed at a position of 50% in the axial middle of the filter 290 (± 25% with respect to the central axis).

With the above configuration, the same functions and effects as those of the second embodiment can be achieved.

### <Third embodiment>

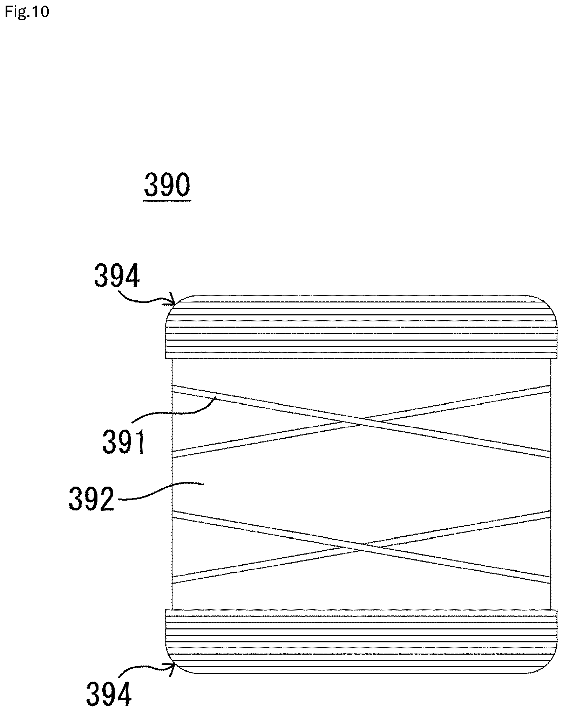

Next, a third embodiment of the present invention will be described in detail with reference to the drawings. Note that since a gas generator 300 of the present embodiment is similar to the first embodiment except for the filter 90 of the first embodiment, the description of the similar portion will be omitted except for the points to be particularly described, and a filter 390 used in the present embodiment illustrated in FIG. 10 will be described. Furthermore, the last two digits of the reference signs in the present embodiment and the reference signs in the first embodiment are the same members unless otherwise specified, and thus the description thereof will be omitted.

The filter 390 is formed by spirally winding a metal wire material 391 around two turns per layer from one axial end portion to the other axial end portion, and is not sintered. Furthermore, the filter 390 is different from the filter 90 of the first embodiment mainly in that the terminal end portion of the metal wire material 391 of the outermost layer is adhered to the adjacent layer by the same adhesion means as in the first embodiment to form the same adhesive portion as in the first embodiment, but corner portions 394 having a rounded shape are provided in the vicinity of both terminal end portions. Here, the rounded shape refers to a gentle shape having no acute angle portion, such as an R shape or a shape like a part of an ellipse in a side view.

Furthermore, the metal wire material 391 at the end surface of the end portion of the filter 390 is disposed along a surface (substantially horizontal surface in the present embodiment) in a direction substantially perpendicular to the axial direction of the filter 390.

The corner portion 394 is formed by arranging the metal wire materials 391 of at least two line segments in parallel. Furthermore, the end portion including the corner portion 394 may be formed to have a diameter larger than that of the central portion, and may be formed to occupy a region of about 25% of both ends in the axial direction as the alignment width of the metal wire material 391.

In the process of forming a filter similar to the filter 90 of the first embodiment, the end portion including the corner portion 394 is formed by winding the metal wire material 391 so as to be intentionally in the state illustrated in FIG. 10. Note that the end portion including the corner portion 394 may be formed by forming a filter similar to the filter 90 of the first embodiment, winding the metal wire material 391 around each of both end portions, and then compressing and forming the corner portion 394 so as to be rounded.

Although the embodiment of the present invention has been described above, it is merely an example, and the present invention is not particularly limited, and the specific configuration and the like can be modified in design as appropriate. Furthermore, the actions and effects described in the embodiments of the present invention merely enumerate the most suitable actions and effects resulting from the present invention, and the actions and effects according to the present invention are not limited to those described in the embodiments of the present invention.

For example, in the second embodiment, the region where the adhesive portion is not provided may be only the lower end portion of the filter as long as the direction of the filter assembled to the lower side shell of the gas generator is determined in advance.

Furthermore, in the third embodiment, the corner portion 394 may be only the lower end portion of the filter as long as the direction of the filter to be assembled to the lower side shell of the gas generator is determined in advance.

Furthermore, the respective parts of the above embodiment and modification may be appropriately combined as necessary.

### REFERENCE SIGNS LIST

10, 310 lower side shell
11, 311 bottom plate portion
12, 312 circumferential wall portion
13, 313 protruding cylinder portion
14, 314 recessed portion
15, 315 opening portion
20, 320 upper side shell
21, 321 top plate portion
22, 322 circumferential wall portion
23, 323 gas ejection port
24, 324 sealing tape
28, 328 gap portion
30, 330 holding portion
31, 331 inner covering portion
32, 332 outer covering portion
33, 333 connecting portion
34, 334 female connector portion
40, 340 igniter
41, 341 ignition portion
42, 342 terminal pin
50, 350 cup-shaped member
51, 351 top wall portion
52, 352 side wall portion
53, 353 extension portion
54, 354 distal end portion
57, 357 enhancer chamber
59, 359 enhance agent
60, 360 combustion chamber
61, 361 gas generating agent
70, 370 lower support member
71, 81, 371, 381 base portion
72, 82, 372, 382 abutment portion
73, 373 erected portion
80, 380 upper support member
85, 385 cushion material
90, 90A, 90B, 90C, 90D, 90E, 90F, 190, 290, 390 filter
90G cylindrical model
90H portion (of cylinder model)
91, 191, 291, 391 metal wire material
191a, 291a, 91A, 91B, 91C, 91E, 91F part (of metal wire material)
191b, 191c surplus portion
92, 192, 292, 392 adjacent layer
93, 93A, 93B, 93C, 93D, 93E, 93Fadhesive portion
100, 300 disk-type gas generator
110a R-shaped portion
394 corner portion

## Claims

1. A winding filter not subjected to sintering, the winding filter comprising a cylindrical body including a stitch by overlapping at least one element wire forming a plurality of layers in a radial direction, wherein
a terminal end portion of the element wire of an outermost layer among the plurality of layers is joined by:
adhesion to a part of a layer adjacent at least radially inward relative to the outermost layer;
being drawn into an inner surface side via either one of axial end portions and adhesion to at least a part of an innermost layer, or
adhesion to a part of either one of the axial end portions, and
a joining strength of the terminal end portion is 5 N or more.

2. The winding filter according to claim 1, wherein
the adhesion is adhesion by welding, and
the joining strength of the terminal end portion is a welding strength.

3. A winding filter not subjected to sintering, the winding filter comprising a cylindrical body including a stitch by overlapping at least one element wire forming a plurality of layers in a radial direction, wherein
a terminal end portion of the element wire of an outermost layer among the plurality of layers is joined by adhesion to a part of a layer (hereinafter, an adjacent layer) adjacent to the outermost layer on a radially inner side, and
the terminal end portion is joined to the adjacent layer at any position in a region having a length within a half from an axial intermediate position of the cylindrical body to one axial end portion of the cylindrical body and a region having a length within a half from the axial intermediate position of the cylindrical body to another axial end portion of the cylindrical body.

4. The winding filter according to any one of claims 1 to 3, wherein a corner portion of at least one end portion of both axial end portions of the cylindrical body is formed in a rounded shape as viewed from a side.

5. The winding filter according to claim 4, wherein the rounded shape is formed by at least two element wires being arranged in parallel.

6. The winding filter according to claim 4 or 5, wherein the element wire in an end surface of the end portion formed in the rounded shape is disposed along a surface in a direction substantially perpendicular to an axial direction of the cylindrical body.
